# EUROPÄISCHE PATENTSCHRIFT

(11) **EP 1 479 546 B1**
(45) Veröffentlichungstag und Bekanntmachung des Hinweises auf die Patenterteilung: **16.01.2008**
(21) Anmeldenummer: 04011741.8
(22) Anmeldetag: 18.05.2004
(51) Int. Cl.: B60H 1/00

(54) **Verfahren und Vorrichtung zur Steuerung einer Einrichtung zum Austausch von Wärme**
Method and device for controlling a heat exchanging equipment
Procédé et appareil de commande d'un dispositif d'échange de chaleur

(30) Priorität: 23.05.2003 DE 10323813
(43) Veröffentlichungstag der Anmeldung: 24.11.2004
(73) Patentinhaber: Behr GmbH & Co. KG, 70469 Stuttgart (DE)
(72) Erfinder: Baruschke, Wilhelm, 73117 Wangen (DE); Britsch-Laudwein, Armin, 71272 Renningen (DE); Bureau, Cathy, 48009 Birmingham MI (US); Lochmahr, Karl, 71665 Vaihingen (DE); Morgenstern, Stefan, 70499 Stuttgart (DE)
(74) Vertreter: Grauel, Andreas

(56) Entgegenhaltungen:
- EP-A- 0 861 746
- EP-A- 1 213 166
- EP-A- 1 283 117
- DE-A- 10 226 089
- US-B1- 6 367 272

## Beschreibung

Die vorliegende Erfindung bezieht sich auf ein Verfahren zur Steuerung einer Klimaanlage für ein Kraftfahrzeug.

Klimaanlagen in Kraftfahrzeugen sind im Stand der Technik seit langem bekannt. Diese Klimaanlagen weisen jedoch den Nachteil auf, dass sie nicht bei Stillstand des Verbrennungsmotors des Kraftfahrzeugs betrieben werden können, da keine Einrichtungen zum Betrieb des Klimanlagenkompressors vorhanden sind. Insbesondere an besonders heißen Tagen mit entsprechend hoher Sonnenstrahlungsintensität besteht jedoch ein Bedürfnis, die Fahrt mit einem bereits vorklimatisierten Fahrzeug anzutreten. Die gattungsgemäße EP 1 213 166 offenbart ein Verfahren zur Steuerung einer Klimaanlage für ein Kraftfahrzeug, wobei der Ladezustand eines Akkumulators als Regelwert gemessen wird, und wobei in Abhängigkeit von diesem Regelwert ein Kompressor der Klimaanlage betrieben wird, oder ausgeschaltet wird.

Die Druckschrift EP 1 221 392 offenbart ein Verfahren, wobei die Kompressorleistung in abhängigkeit der zur Verfügung stehenden Kapazität des Akkumulators geregelt wird.

Der Erfindung liegt daher die Aufgabe zugrunde, ein Verfahren zum Betreiben einer Klimaanlage und eine Klimaanlage zu schaffen, welche auch bei Stillstand eines Fahrzeugverbrennungsmotors betrieben werden kann, wobei die Energiereserve optimal genützt wird.

Dies wird durch das erfindungsgemäße Verfahren und die erfindungsgemäße Klimaanlage erreicht.

Bei dem erfindungsgemäßen Verfahren zur Steuerung einer Klimaanlage für ein Kraftfahrzeug wird zunächst ein erster Satz an Kenngrößen ermittelt und anschließend ein zweiter Satz an Kenngrößen eingegeben. Auf Grundlage des ersten und zweiten Satzes an Kenngrößen wird wenigstens ein Kennwert in einem weiteren Schritt ermittelt. Des weiteren wird ein Regelwert gemessen und schließlich wenigstens ein erster Stellsignal an einen Kompressor und wenigstens ein zweiter Stellsignal an einen Lüfter und/oder ein Gebläse der Klimaanlage unter Berücksichtigung des ersten Kennwertes und des ersten Regelwertes ausgegeben. Dabei werden der Kompressor der Lüfter und das Gebläse der Klimaanlage wenigstens zeitweise nicht durch die von einem Verbrennungsmotor bereitgestellte Energie betrieben. Dabei ist der Regelwert der Ladezustand und/oder die Belastbarkeit eines Akkumulators, das erste Stellsignal die Leistung des Kompressors und das zweite Stellsignal die Leistung des Lüfters und/oder Gebläses der Klimaanlage.

Bei den Kenngrößen des ersten Satzes an Kenngrößen handelt es sich um solche Kenngrößen, die aus einer Gruppe von Kenngrößen ausgewählt sind, welche die Außentemperatur, das heißt die Temperatur außerhalb des Fahrzeuges, die Innentemperatur, das heißt die Temperatur in der Fahrgastzelle, die Lichtintensität, den Kältemitteldruck, das heißt den Kältemitteldruck innerhalb wenigstens einer Einrichtung zum Austausch von Wärme, sowie die Temperatur wenigstens einer Einrichtung zum Austausch von Wärme enthält.

Bei den Kenngrößen des zweiten Satzes an Kenngrößen handelt es sich um solche Kenngrößen, die aus einer Gruppe von Kenngrößen ausgewählt sind, welche den Temperatursollwert, einen vorgegebenen Zeitwert oder dergleichen enthält.

Bevorzugt wird das Stellsignal an wenigstens eine Einrichtung ausgegeben, welche aus einer Gruppe von Einrichtungen ausgewählt ist, welche Gebläse, insbesondere Gebläse für einen Verdampfer, Kondensator, Lüfter, Klappensteuerungen und dergleichen enthält.

Ferner wird bevorzugt wenigstens ein Lüfter in Abhängigkeit von wenigstens dem Kältemitteldruck gesteuert und/oder geregelt.

Bevorzugt wird ein Kühlleistungsbedarf aus einer Gruppe von Kenngrößen ermittelt, welche wenigstens den Temperatursollwert, die Außentemperatur und die Innentemperatur enthält. Bei dem Kühlleistungsbedarf handelt es sich um denjenigen Bedarf an Kühlleistung, der nötig ist, um bei vorgegebener Außentemperatur und Innentemperatur eine bestimmte Temperatur im Fahrzeuginnenraum, bevorzugt auch noch innerhalb einer gewissen Zeit, zu erreichen. Dabei können auch weitere Parameter, wie der Kältemittelhochdruck und die Lichtintensität berücksichtigt werden.

Die Erfindung ist ferner auf eine Klimaanlage für ein Fahrzeug, gerichtet, welche wenigstens einen Kompressor zur Komprimierung von Kältemittel, wenigstens einen Lüfter und/oder Gebläse, wenigstens eine erste Einrichtung zum Austausch von Wärme, wenigstens eine zweite Einrichtung zum Austausch von Wärme sowie wenigstens eine Steuerungseinrichtung enthält, welche dazu ausgebildet ist, die Klimaanlage nach einem der oben genannten Verfahren zu steuern und/oder zu regeln.

Bei der ersten oder zweiten Einrichtung zum Austausch von Wärme handelt es sich bevorzugt um einen Verdampfer und/oder einen Kondensator einer Klimaanlage. Dabei wird der Kompressor der Klimaanlage nicht vom Verbrennungsmotor des Fahrzeugs angetrieben. Dies bedeutet, dass die Klimaanlage auch betrieben werden kann, wenn der Verbrennungsmotor des Fahrzeuges stillsteht.

In einer bevorzugten Ausführungsform weist die Klimaanlage eine Energieabgabeeinrichtung auf. Dabei weist die Energieabgabeeinrichtung bevorzugt eine Energiezwischenspeicherungseinrichtung auf, so dass diese Energie jederzeit wieder aus der Energieabgabeeinrichtung abgerufen werden kann.

Bevorzugt ist die Energieabgabeeinrichtung aus einer Gruppe von Energieabgabeeinrichtungen ausgewählt, welche Solarzellen, Brennstoffzellen und dergleichen enthält. Die Solarzellen sind dabei bevorzugt an einem Ort des Kraftfahrzeuges angeordnet, der in besonderem Maße dem Sonnenlicht ausgesetzt ist, wie beispielsweise einem Flächensegment des Autodachs. Bei der Energiezwischenspeicherungseinrichtung handelt es sich in einer bevorzugten Ausführungsform um eine Batterie, welche die von den Solarzellen erzeugte Energie speichert.

Bei der Lüftungseinrichtung kann es sich zum Beispiel um ein im Fahrzeug vorhandenes Gebläse der Klimaanlage handeln, das in vorteilhafter Weise auch beim Fahrzeugstillstand über die oben erwähnte Energiespeicherungseinrichtung betrieben werden kann. Durch den Betrieb der Lüftungseinrichtung wird ein übermäßiger Temperaturanstieg der Luft im Fahrzeuginnenraum vermieden, so dass die Kfz-Klimaanlage bei Fahrbeginn keine allzu großen Temperaturunterschiede im Fahrzeuginnenraum überbrücken muss.

In einer weiteren bevorzugten Ausführungsform ist wenigstens eine Sensoreinrichtung zur Ermittlung wenigstens einer Kenngröße vorgesehen. Bevorzugt ist dabei wenigstens eine Sensoreinrichtung aus einer Gruppe von Sensoreinrichtungen ausgewählt, welche Temperatursensoren, Drucksensoren, Lichtintensitätssensoren, Spannungssensoren, Stromsensoren und dergleichen enthält.

In einer weiteren bevorzugten Ausführungsform weist die Vorrichtung eine Zeitgebereinrichtung auf. Dabei handelt es sich um eine Einrichtung, welche es dem Benutzer erlaubt, einen bestimmten Zeitpunkt vorab zu wählen, zu welchem er eine Fahrt antreten will. Daneben lässt sich über diese Zeitgebereinrichtung auch eine Zeitspanne eingeben, innerhalb welcher eine Fahrt angetreten werden soll. In einer weiteren bevorzugten Ausführungsform weist die Vorrichtung eine Einrichtung zur Beeinflussung der Luftverteilung auf. Zudem kann ein automatischer Moduswechsel zwischen einer Frischluftbetriebsart und einer Umluftbetriebsart ermöglicht werden.

In einer weiteren bevorzugten Ausführungsform ist wenigstens eine Prozessoreinrichtung vorgesehen, welche ein in wenigstens einer Speichereinrichtung abgelegtes Programm verwendet, um ein Verfahren nach der oben beschriebenen Art durchzuführen.

Weitere Vorteile der Erfindung ergeben sich aus den beigefügten Zeichnungen. Darin zeigen:
- Fig. 1: eine schematische Darstellung der Klimaanlage;
- Fig. 2: ein Blockschaltbild für ein erfindungsgemäßes Verfahren zur Steuerung einer Klimaanlage;
- Fig. 3: ein Diagramm, welches die benötigte Kompressorleistung in Abhängigkeit vom Kühlleistungsbedarf zeigt;
- Fig. 4: ein Diagramm, welches die benötigte Leistung eines Verdampfergebläses in Abhängigkeit vom Kühlleistungsbedarf zeigt;
- Fig. 5: ein Diagramm, welches die Kondensatorgebläseleistung in Abhängigkeit vom Hochdruck des Kältemittels zeigt;
- Fig. 6: eine Darstellung, welche die Leistungsaufteilung einzelner Komponenten in Abhängigkeit von der Betriebszeit der Klimaanlage zeigt;
- Fig. 7: die unterschiedlichen Leistungsaufteilungen einer Standklimatisierung nach dem erfindungsgemäßen Verfahren.

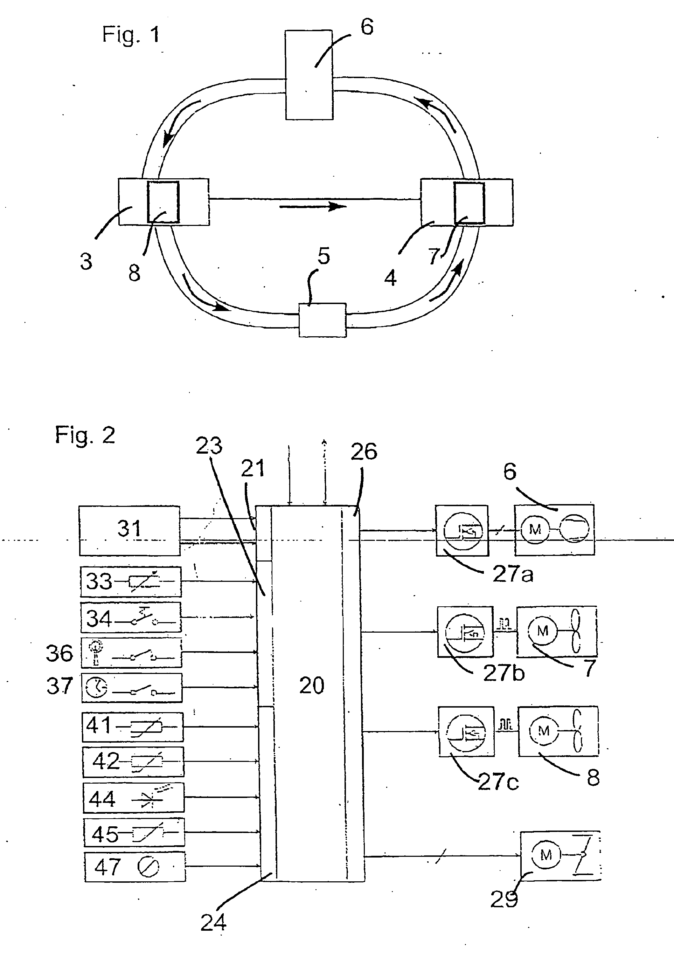

Fig. 1 zeigt schematisch und sehr stark vereinfacht die wesentlichen Bestandteile einer Klimaanlage für ein Kraftfahrzeug. Dabei beziehen sich die Bezugszeichen 3 und 4 auf zwei Vorrichtungen zum Austausch von Wärme, genauer gesagt auf einen Kondensator 3 und einen Verdampfer 4. Der Verdampfer 4 weist ein Verdampfergebläse 7 und der Kondensator einen Kondensatorlüfter 8 auf. Daneben ist ein Kompressor oder Kältemittelverdichter 6 vorgesehen, um das Kältemittel in dem Kondensator zu verdichten sowie ein Expansionsventil 5. Daneben ist eine (nicht gezeigte) Luftklappe, mittels derer die Menge an Luft, das heißt Frischluft oder Umluft, eventuell auch teilweise Frischluft und teilweise Umluft, die angesaugt wird, eingestellt werden kann. Die Pfeile geben die Flussrichtung eines Kältemittels im Kreislauf der Klimaanlage an.

Daneben ist eine Energieabgabeeinrichtung, wie beispielsweise ein Solarzellenpanel oder Brennstoffzellen vorgesehen. Eine Energiezwischenspeichereinrichtung, wie beispielsweise eine Batterie, ermöglicht jederzeit den Abruf von Energie in begrenztem Maße.

Fig. 2 zeigt ein Blockschaltbild zur Veranschaulichung des erfindungsgemäßen Verfahrens zur Steuerung einer Klimaanlage.

Das Bezugszeichen 20 kennzeichnet eine Steuereinrichtung, die unten im Detail beschrieben wird.

Das Bezugszeichen 31 kennzeichnet ein Leistungsmanagment einer Batterie bzw. eines Energiezwischenspeichers der oben genannten Art. Die Steuereinrichtung 20 überprüft vorzugsweise kontinuierlich oder in vorgegebenen Zeitabständen den Ladezustand und/oder die Belastbarkeit der Speicherbatterie. Die Bezugszeichen 33 bis 37 kennzeichnen verschiedene Eingabepositionen, die es dem Benutzer erlauben, die Klimaanlage zu bedienen bzw. zu programmieren. Das Bezugszeichen 33 bezieht sich auf einen Sollwertsteller, durch welchen der Benutzer eine gewünschte Temperatur im Fahrzeuginnenraum, beispielsweise bei Fahrtantritt, einstellen kann.

Das Bezugszeichen 34 kennzeichnet einen Schalter zum direkten Aktivieren der Klimaanlage. Das Bezugszeichen 37 bezieht sich auf einen zeitgebergesteuerten Schalter. Mit Hilfe dieses Schalters kann der Benutzer beispielsweise voreinstellen, zu welcher Zeit er eine Fahrt antreten möchte, das heißt zu welcher Zeit er in das klimatisierte Auto einsteigen möchte. Weiterhin ist es auch möglich, dass über ein Funksignal oder ein vergleichbares Signal, Bezugszeichen 36 die Klimaanlage aktiviert werden kann. Auf diese Weise kann der Benutzer die Klimaanlage aus größerer Entfernung, beispielsweise von seiner Wohnung aus, aktivieren.

Die genannten Kennwerte 33 bis 37 oder einzelne dieser Kennwerte werden über die Eingabe 23 in die Steuereinrichtung 20 eingegeben. Über die Sensorik 24 werden die Kennwerte 41, 42, 44, 45 und 47 in die Steuereinrichtung 20 eingegeben. Bezugszeichen 41 und 42 kennzeichnen Temperatursensoren für die Außentemperatur und die Innentemperatur in der Fahrgastzelle. Das Bezugszeichen 44 kennzeichnet einen Solarsenor, der die Lichtintensität, welche auf das Fahrzeug auftrifft, misst. Das Bezugszeichen 45 kennzeichnet einen Sensor, der die Verdampfertemperatur misst und das Bezugszeichen 47 einen Sensor, der den Kältemittelhochdruck im bzw. nach dem Kondensator misst. Aus den eingegebenen Werten sowie den durch die Sensoren gemessenen Werten ermittelt die Steuereinrichtung den Kühlleistungsbedarf (im folgenden auch mit Y bezeichnet), der besteht, um das Fahrzeug in der beispielsweise durch den Zeitgeber bestimmten Zeit auf den Sollwert zu kühlen.

Aus dem so ermittelten Kühlleistungsbedarf Y ermittelt die Steuereinrichtung, in welcher Weise die Einrichtungen der Klimaanlage angesteuert werden müssen, wobei bei dieser Ermittlung permanent der Ladezustand und die Belastbarkeit der Batterie überprüft und berücksichtigt werden. Das Bezugszeichen 26 kennzeichnet die Ausgänge der Steuereinrichtung 20 für die Ansteuerung dreier Regeleinrichtungen 27a, 27b und 27c. Die einzelnen Regeleinrichtungen steuern bzw. regeln den (bevorzugt elektrisch betriebenen) Kompressor 6, das Verdampfergebläse 7 sowie einen Kondensatorlüfter 8. Die einzelnen Regeleinrichtungen 27a, 27b und 27c können dabei so ausgeführt sein, dass sie die zu regelnden Einrichtungen, das heißt den Kompressor 6, das Verdampfergebläse 7 und den Kondensatorlüfter 8, entweder in vorbestimmten Abschnitten ein- oder ausschalten oder die Leistung der einzelnen Einrichtungen kontinuierlich regeln.

Daneben wird über den Ausgang der Steuereinrichtung 20 wenigstens eine Luftklappe 29 gesteuert. Die Luftklappe 29 ist stellvertretend für Luftverteilungsklappen bzw. Frischluft/Umluftklappen dargestellt.

Der Kühlleistungsbedarf wird, wie oben erwähnt, aus der gewählten Sollwerteinstellung, der Innen- und Umgebungstemperatur, der Sonneneinstrahlung und übrigen Parametern bestimmt und durch den Ladezustand bzw. die Belastbarkeit der Speicherbatterie begrenzt. Diese Bestimmung des Kühlleistungsbedarfs Y entspricht im wesentlichen auch dem Normalbetrieb der Kfz-Klimaanlage, das heißt dem Betrieb bei laufendem Verbrennungsmotor.

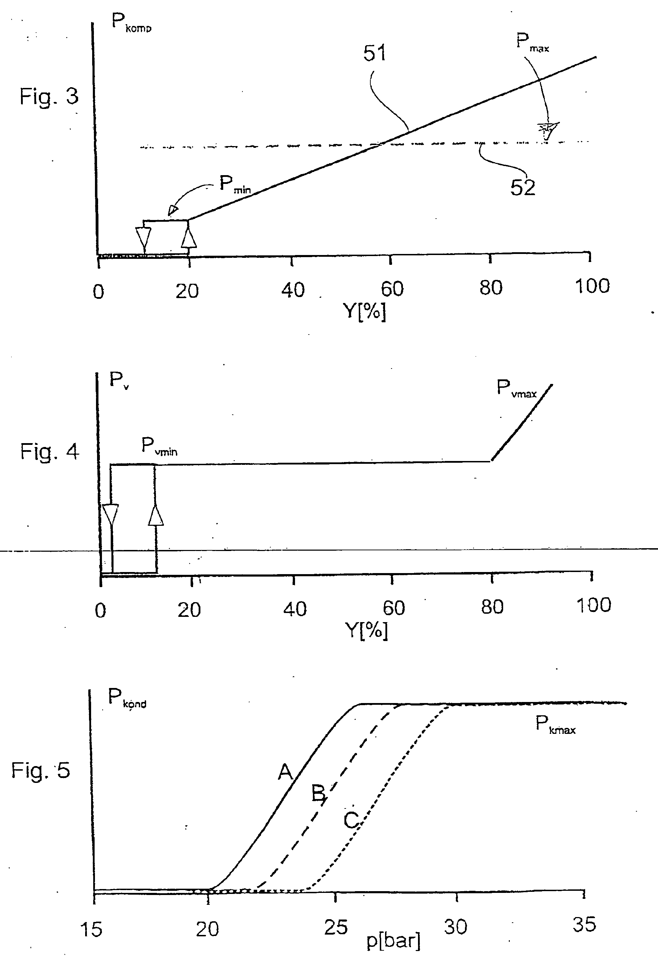

Fig. 3 zeigt ein Diagramm, welches die Kompressorleistung in Abhängigkeit vom Kühlleistungsbedarf Y darstellt. Die Linie 51 zeigt beispielhaft die Abhängigkeit der Kompressorleitung vom Kühlleistungsbedarf ohne jegliche Einschränkungen. Die gestrichelte Linie 52 kennzeichnet die Begrenzung der Kompressorleistung. Bei abgeschaltetem Verbrennungsmotor des Kraftfahrzeuges kann maximal die durch die gestrichelte Linie angedeutete Leistung P von den Batterieeinrichtungen an den Kompressor abgegeben werden. Das heißt, der Kompressor kann nicht mit maximaler Leistung betrieben werden, sondern wird durch die Parameter Ladezustand und/oder Belastbarkeit der Batterie begrenzt.

Erfindungsgemäß wird die Leistung des Kompressors unter Berücksichtigung der Leistungsfähigkeit der Speicherbatterie geregelt und/oder gesteuert, wobei die durch die Steuereinrichtung 20 ermittelten Kenngrößen berücksichtigt werden. So wird beispielsweise bei Erreichen oder Unterschreiten der Zieltemperatur, das heißt des Sollwertes, die Leistung des Kompressors entsprechend reduziert.

Daneben hängt die an den Kompressor abgegebene Leistung auch von der Zeit ab, innerhalb welcher die Zieltemperatur erreicht werden soll. Zur Steuerung des Kompressors und/oder des Kondensatorlüfters und/oder des Verdampfergebläses stehen unterschiedliche Betriebsmodi zur Verfügung, die unten im Detail dargestellt werden.

Die einzelnen Komponenten der Klimaanlage, d.h. der Kompressor, das Kondensator- und das Verdampfergebläse von der Energiezwischenspeicherungseinrichtung und ggf. zusätzlich von der Energieabgabeeinrichtung betrieben.

Fig. 4 zeigt die Leistung des Verdampfergebläses in Abhängigkeit vom benötigten Kühlleistungsbedarf. Wie sich aus der Figur ergibt, kann die Leistung des Verdampfergebläses bis zu einem Kühlleistungsbedarf im Bereich von 80 % konstant gehalten werden. Bei erhöhtem Kühlleistungsbedarf erfolgt eine Anhebung auf eine maximale Verdampfergebläseleistung.

Fig. 5 zeigt die Abhängigkeit der Kondensatorgebläseleistung von dem Kältemittelhochdruck. Im Prinzip erfolgt die Steuerung der Kondensatorlüfterleistung wie im Normalbetrieb, das heißt bei laufendem Verbrennungsmotor, in Abhängigkeit vom Kältemittelhochdruck. Im Unterschied zum Normalbetrieb wird jedoch das zulässige Druckniveau über der Außentemperatur geringfügig angehoben, um die Lüfterleistung etwas zu reduzieren und damit die Batterie zu schonen. Auf diese Weise stellt sich der Arbeitspunkt bezüglich der Leistungsströme von Kondensatorlüfter und Kompressor automatisch ein. Dies ist in Fig. 5 beispielhaft anhand dreier verschiedener Außentemperaturen gezeigt. Verlauf A zeigt die Abhängigkeit der Kondensatorlüfterleistung von Kältemittelhochdruck bei einer Außentemperatur von 20°C, Verlauf B bei einer Außentemperatur von 30°C und Verlauf C bei einer Außentemperatur von 40°C.

Bei niedrigerer Außentemperatur wird bereits bei einem geringeren Kältemittelhochdruck das Kondensatorgebläse mit der Leistung betrieben, die bei höherer Außentemperatur erst bei einem höheren Kältemittelhochdruck erreicht wird. Bevorzugt wird diese Abhängigkeit nicht für drei begrenzte Außentemperaturen gesteuert bzw. geregelt, sondern die Regelung erfolgt stufenlos bzw. fließend für den jeweils gemessenen Außentemperaturwert.

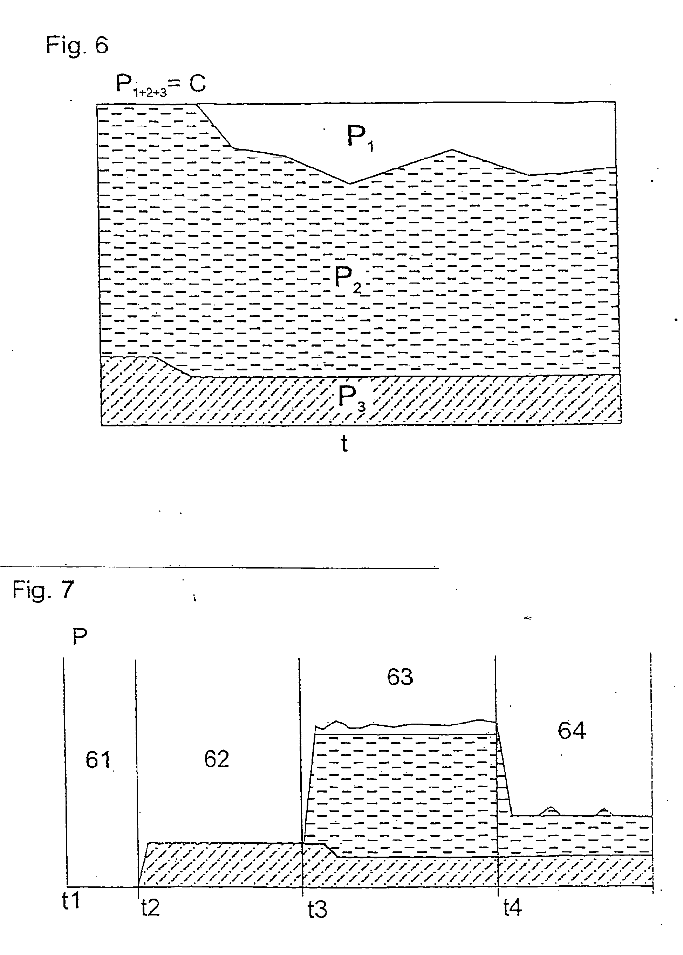

Fig. 6 ist schematisch ein Beispiel für die Leistungsaufteilung an das Verdampfergebläse P3, den Kompressor P2 und das Kondensatorgebläse P1 dargestellt. Die Gesamtleistung P1 und P2 und P3 ist dabei konstant. Die Auftragung erfolgt in Abhängigkeit von der Zeit t.

Zu Beginn wird das Verdampfergebläse mit einer vorgegebenen Leistung betrieben, welche im Laufe der Zeit zurückgefahren werden kann. Einen Großteil der Gesamtleistung nimmt die Kompressorleistung P2 ein. Ab einem gewissen Zeitpunkt muss typischerweise auch das Kondensatorgebläse betrieben werden, um einen optimalen Wirkungsgrad der Klimaanlage zu erreichen. Am Anfang ist noch kein Betreiben des Kondensatorgebläses nötig, da der Kondensator am Anfang noch eine relativ geringe Temperatur aufweist.

Fig. 7 zeigt schematisch den kompletten Kühlleistungsverlauf für den Fall, dass vom Benutzer eine Fahrtantrittszeit vorprogrammiert wurde. Dabei werden die einzelnen relevanten Zeitpunkte t1, t2, t3 und t4 durch jeweils vertikale Linien dargestellt. t4 ist der Zeitpunkt, der vom Benutzer als Fahrtantritt eingegeben wurde. Vom Zeitpunkt t1 bis zum Zeitpunkt t2 (Phase 61) befindet sich die Klimaanlage in Ruhe. Das heißt, weder der Kompressor noch der Kondensator oder das Verdampfergebläse werden aktiviert. Zum Zeitpunkt t2 wird das Verdampfergebläse mit einer vorbestimmten Leistung aktiviert. Dies dient dazu, um den Fahrzeuginnenraum zu lüften (sogenanntes Standlüften / Phase 62). Der Zeitpunkt t2 wird durch die Steuereinrichtung aufgrund der gemessenen Daten ermittelt, das heißt insbesondere aufgrund der Innentemperatur, der Außentemperatur und der vom Benutzer vorgegebenen Zeit t4. Zum Zeitpunkt t3 wird die Vorklimatisierungsphase (63) eingeleitet. Nunmehr wird auch der Kompressor sowie das Kondensatorgebläse aktiviert. Diese Phase entspricht im wesentlichen der in der Fig. 6 gezeigten Phase. Ab dem Zeitpunkt t4 (Phase 64), das heißt dem vom Fahrer vorbestimmten Zeitpunkt, wird, sofern die Fahrt zu diesem Zeitpunkt noch nicht angetreten wird, die Innentemperatur des Fahrzeugs aufrecht erhalten, das heißt die Kompressorleistung wird erheblich heruntergeregelt, da nicht von vorneherein absehbar ist, über welchen Zeitraum sich diese Phase nach dem Zeitpunkt t4 erstrecken wird.

Bevorzugt ist noch eine weitere (nicht gezeigte) Ruhephase vorgesehen, für den Fall, dass die Fahrt auch nach längerer Zeit nicht angetreten wird.

Daneben liegt es auch im Rahmen der Erfindung, zumindest während Phase 64 die einzelnen Komponenten der Klimaanlage, d.h. den Kompressor und/oder das Kondensatorgebläse und oder das Verdampfergebläse und/oder die wenigstens eine Luftklappenssteuerung im wesentlichen durch die von der Energieabgabeeinrichtung zur Verfügung gestellte und von der Energiezwischenspeicherungseinrichtung zwischengespeicherte Energie zu betreiben, um auf diese Weise die Autobatterie weitmöglichst zu schonen.

Bevorzugt werden mehrere Betriebsarten bzw. Betriebsmodi zur Verfügung gestellt. Ein erster Modus dient der Aktivierung durch Fernsteuerung. Dabei befindet sich das Fahrzeug zunächst mit abgestelltem Motor in warmer Umgebung unter Sonneneinstrahlung. Dadurch heizt sich der Fahrzeuginnenraum auf. Kurz vor Abfahrt wird vom Benutzer bzw. vom Fahrer die Funktion "Vorklimatisierung", welche in Fig. 7 dem Bereich 63 entspricht, ausgelöst. Dies kann beispielsweise mittels eines im Fahrzeugschlüssel integrierten Senders und eines im Fahrzeug integrierten Empfängers erfolgen, wobei bevorzugt der Sender das Startsignal sowie einen Identifikationscode sendet.

Aufgrund dieses Signals wird der Fahrzeuginnenraum so schnell und effizient wie möglich abgekühlt, wobei die maximale Abkühlleistung durch den Ladezustand und die Belastbarkeit der Batterie bestimmt wird. Die Aufsparung einer Energiereserve für eine Erhaltungsklimatisierung, das heißt eine Phase 64, ist in diesem Fall nicht erforderlich.

In einer weiteren Betriebsart parkt das Fahrzeug mit abgestelltem Motor in warmer Umgebung unter Sonneneinstrahlung, wodurch sich auch hier der Fahrzeuginnenraum aufheizt.

In diesem Fall hat jedoch der Fahrer bereits lange Zeit vor Fahrtantritt die Funktion Vorklimatisierung durch Eingabe der Abfahrtszeit aktiviert. Automatisch wird unter Berücksichtigung der Kenngrößen, das heißt der eingestellten Fahrtantrittszeit, der Innen- oder Außentemperatur sowie der übrigen Größen, der optimale Einschaltpunkt für die Vorklimatisierung ermittelt.

Der Fahrzeuginnenraum wird über den berechneten Zeitraum 63 so effizient wie möglich abgekühlt und anschließend im Zeitraum 64 kühl gehalten. Die Phase 64 tritt hier nur für den Fall einer verspäteten Abfahrt in Aktion.

In einer weiteren Betriebsart parkt das Fahrzeug zunächst wieder, wie bei den obigen Betriebsarten, mit abgestelltem Motor in warmer Umgebung unter Sonneneinstrahlung, wodurch der Fahrzeuginnenraum aufgeheizt wird.

Die Personen steigen in das Fahrzeug ein und aktivieren vor Fahrtantritt die Funktion Vorklimatisierung (Fahrzeit 63 in Fig. 7), eine Erkennung erfolgt beispielsweise über eine Sitzbelegungssensorik. In diesem Fall wird der Fahrzeuginnenraum möglichst komfortabel abgekühlt, das heißt unter Verwendung geringerer Luftströmungsgeschwindigkeiten und eines niedrigeren Geräuschniveaus durch Einstellung einer relativ geringer Verdampfergebläseleistung. Auch hier ist die Aufsparung einer Energiereserve für die Erhaltungsklimatisierung (Phase 64 in Fig. 7) nicht erforderlich.

Bei einer weiteren Betriebsart wird das Fahrzeug nach (gegebenenfalls längerer) Fahrt mit stationären komfortablen Innenraumbedingungen abgestellt und ist starker Sonneneinstrahlung ausgesetzt. Der Fahrer und/oder die Mitfahrer bleiben im Fahrzeug bei abgestelltem Verbrennungsmotor sitzen, wie beispielsweise Taxifahrer an einem Wartestand oder ein Fahrzeug an einer Tankstelle. Diese Rahmenbedingungen treten auch ein, wenn das Fahrzeug im Straßenverkehr wiederholt kurzzeitig zum Stehen kommt, wie zum Beispiel bei einem Ampelstopp, einer Bahnschranke und ähnlichem, wobei der Verbrennungsmotor dabei immer wieder abgestellt wird.

Wünschenswert ist es auch hier, den Klimakomfort im Innenraum auch während der Stillstandsphasen zu erhalten. Dies wird erreicht, indem bei abgestelltem Verbrennungsmotor die Erhaltungsklimatisierung (Phase 64 in Fig. 7) eingestellt wird.

Zur Betreibung des elektrischen Kompressors wird bevorzugt eine Spannung von mehr als 12 Volt zur Verfügung gestellt, wie beispielsweise 42 Volt, um eine verbesserte Leistungsübertragung zur Verfügung zu stellen. In einer bevorzugten Ausführungsform wird eine adaptive Regelungs- und/oder Steuerungsstrategie für das Solarklimasystem vorgesehen, das heißt die optimierte Aufteilung der Leistungsströme an den Kompressor, die Kondensator- und die Verdampfergebläse erfolgen zu jedem Zeitpunkt auf selbstlernende Art und Weise.

Dies bedeutet, dass der jeweilige Arbeitspunkt der Vorrichtung, insbesondere die Verteilung der einzelnen Leistungsströme nicht nur durch die Kennwerte bestimmt wird, sondern, die Steuerung die einzelnen Leistungsströme im Rahmen vorgegebener Grenzen variiert und dabei jeweils die Effizienz des Systems überprüft um auf diese Weise einen möglichst günstigen Arbeitspunkt im wesentlichen selbstregulierend einzustellen.

## Patentansprüche

1. Verfahren zur Steuerung einer Klimaanlage für ein Kraftfahrzeug mit den Schritten:
- Ermittlung eines ersten Satzes an Kenngrößen;
- Eingabe eines zweiten vorgegebenen Satzes an Kenngrößen;
- Ermittlung eines ersten Kennwertes auf Grundlage des ersten und des zweiten vorgegebenen Satzes an Kenngrößen;
- Messung eines Regelwerts;
- Ausgabe wenigstens eines ersten Stellsignals an einen Kompressor und
- Ausgabe wenigstens eines zweiten Stellsignals an einen Lüfter und/oder ein Gebläse der Klimaanlage,
wobei die Stellsignale auf Grundlage wenigstens des ersten Kennwertes und des ersten Regelwerts ermittelt werden,
wobei der Kompressor, der Lüfter und das Gebläse der Klimaanlage wenigstens zeitweise nicht durch von einem Verbrennungsmotor bereitgestellte Energie betrieben wird,
**dadurch gekennzeichnet, dass**
der Regelwert der Ladezustand und/oder die Belastbarkeit eines Akkumulators ist und das wenigstens erste Stellsignal die Leistung des Kompressors und das wenigstens zweite Stellsignal die Leistung des Lüfters und/oder Gebläses der Klimaanlage steuern und/oder regeln.

2. Verfahren nach Anspruch 1, **dadurch gekennzeichnet, dass** die Kenngrößen des ersten Satzes an Kenngrößen aus einer Gruppe von Kenngrößen ausgewählt sind , welche die Außentemperatur, die Innentemperatur, die Lichtintensität, den Kältemitteldruck die Temperatur wenigstens einer Einrichtung zum Austausch von Wärme enthält.

3. Verfahren nach wenigstens einem der vorangegangenen Ansprüche, **dadurch gekennzeichnet, dass** die Kenngrößen des zweiten Satzes an Kenngrößen aus einer Gruppe von Kenngrößen ausgewählt sind, welche den Temperatursollwert, einen vorgegebenen Zeitwert oder dergleichen enthält.

4. Verfahren nach wenigstens einem der vorangegangenen Ansprüche, **dadurch gekennzeichnet, dass** ein Stellsignal an wenigstens eine Einrichtung ausgegeben wird, welche aus einer Gruppe von Einrichtungen ausgewählt ist, welche Gebläse für einen Verdampfer, Lüfter für einen Kondensator oder Klappensteuerungen enthält.

5. Verfahren nach wenigstens einem der vorangegangenen Ansprüche, **dadurch gekennzeichnet, dass** wenigstens ein Lüfter in Abhängigkeit von wenigstens dem Kältemitteldruck gesteuert und/oder geregelt wird.

6. Verfahren nach wenigstens einem der vorangegangenen Ansprüche, **dadurch gekennzeichnet, dass** das in Abhängigkeit ein Kühlleistungsbedarf aus einer Gruppe von Kenngrößen ermittelt wird, welche wenigstens den Temperatursollwert, die Außentemperatur und die Innentemperatur enthält.

7. Klimaanlage für ein Kraftfahrzeug mit wenigstens einen Kompressor zur Komprimierung von Kältemittel, wenigstens einen Lüfter und/oder Gebläse, wenigstens einer ersten Einrichtung zum Austausch von Wärme, wenigstens einer zweiten Einrichtung zum Austausch von Wärme, wenigstens einer Steuerungseinrichtung, welche dazu ausgebildet ist, die Klimaanlage gemäß einem Verfahren nach einem der vorangegangenen Ansprüche zu steuern und/oder zu regeln.

8. Klimaanlage nach Anspruch 7, **dadurch gekennzeichnet, dass** die Klimaanlage eine Energieabgabeeinrichtung aufweist, wobei die Energieabgabeeinrichtung bevorzugt eine Energiezwischenspeicherungseinrichtung aufweist.

9. Klimaanlage nach Anspruch 8, **dadurch gekennzeichnet, dass** die Energieabgabeeinrichtung aus einer Gruppe von Energieabgabeeinrichtungen ausgewählt ist, welche Solarzellen, Brennstoffzellen und dergleichen enthält.

10. Klimaanlage nach Anspruch 7, **dadurch gekennzeichnet, dass** wenigstens eine Sensoreinrichtung zur Ermittlung wenigstens einer Kenngröße vorgesehen ist.

11. Klimaanlage nach Anspruch 7, **dadurch gekennzeichnet, dass** die wenigstens eine Sensoreinrichtung aus einer Gruppe von Sensoreinrichtungen ausgewählt ist, welche Temperatursensoren, Drucksensoren, Lichtintensitätssensoren, Spannungssensoren, Stromsensoren und ähnliches enthält.

12. Klimaanlage nach Anspruch 7, **dadurch gekennzeichnet, dass** eine Zeitgebereinrichtung vorgesehen ist.

13. Klimaanlage nach Anspruch 7, **dadurch gekennzeichnet, dass** eine Einrichtung zur Beeinflussung einer Luftverteilung und/oder einer Frischluft/Umluftklappe vorgesehen ist.

14. Klimaanlage nach Anspruch 7, **dadurch gekennzeichnet, dass** wenigstens eine Prozessoreinrichtung vorgesehen ist, welche ein in wenigstens einer Speichereinrichtung abgelegtes Programm verwendet, um ein Verfahren nach wenigstens einem der vorangegangenen Ansprüche durchzuführen.

## Claims

1. Method for the control of a motor vehicle air-conditioning unit, with the following steps:
- determination of a first set of characteristic magnitudes;
- input of a second, predetermined set of characteristic magnitudes;
- determination of a first characteristic value on the basis of the first and second, predetermined set of characteristic magnitudes;
- measurement of a control value;
- output of at least one first adjustment signal to a compressor, and
- output of at least one second adjustment signal to a blower and/or fan of the air-conditioning unit,
such that the adjustment signals are determined on the basis at least of the first characteristic value and the first control value,
and the compressor, the blower and the fan of the air-conditioning unit are operated at least some of the time by energy not supplied by a combustion engine,
**characterised in that**
the control value is the charge condition and/or the load capacity of an accumulator and the at least one first adjustment signal controls and/or regulates the power of the compressor and the at least one second adjustment signal controls and/or regulates the power of the blower and/or fan of the air-conditioning unit.

2. Method according to Claim 1, **characterised in that** the characteristic magnitudes in the first set of characteristic magnitudes are chosen from a group of characteristic magnitudes comprising the outside temperature, the inside temperature, the light intensity, the coolant pressure and the temperature of at least one heat exchange device.

3. Method according to at least one of the preceding claims, **characterised in that** the characteristic magnitudes of the second set of characteristic magnitudes are chosen from a group of characteristic magnitudes comprising the desired temperature value, a specified time value, or suchlike.

4. Method according to at least one of the preceding claims, **characterised in that** an adjustment signal is emitted to at least one device chosen from a group of devices comprising fans for an evaporator, blowers for a condenser, or shutter controls.

5. Method according to at least one of the preceding claims, **characterised in that** at least one blower is controlled and/or regulated as a function at least of the coolant pressure.

6. Method according to at least one of the preceding claims, **characterised in that** as necessary, a cooling power demand is determined from a group of characteristic magnitudes comprising at least the desired temperature value, the outside temperature and the inside temperature.

7. Air-conditioning unit for a motor vehicle, with at least one compressor for the compression of a coolant, at least one blower and/or fan, at least one first heat exchange device, at least one second heat exchange device, and at least one control unit designed to control and/or regulate the air-conditioning unit in accordance with a method according to any of the preceding claims.

8. Air-conditioning unit according to Claim 7, **characterised in that** the air-conditioning unit comprises an energy release device, this energy release device preferably comprising a device for the intermediate storage of energy.

9. Air-conditioning unit according to Claim 8, **characterised in that** the energy release device is chosen from a group of energy release devices comprising solar cells, fuel cells and suchlike.

10. Air-conditioning unit according to Claim 7, **characterised in that** at least one sensor device is provided for the determination of at least one characteristic magnitude.

11. Air-conditioning unit according to Claim 7, **characterised in that** the at least one sensor device is chosen from a group of sensor devices comprising temperature sensors, pressure sensors, light intensity sensors, voltage sensors, current sensors and suchlike.

12. Air-conditioning unit according to Claim 7, **characterised in that** a timing device is provided.

13. Air-conditioning unit according to Claim 7, **characterised in that** a device is provided for the control of air distribution and/or a fresh air/recirculated air shutter.

14. Air-conditioning unit according to Claim 7, **characterised in that** at least one processor device is provided, which uses a program stored in at least one memory to implement a method in accordance with at least one of the preceding claims.

## Revendications

1. Procédé de commande d'une installation de climatisation pour un véhicule automobile, comprenant les étapes suivantes :
■ détermination d'un premier ensemble de grandeurs caractéristiques ;
■ saisie d'un deuxième ensemble défini de grandeurs caractéristiques ;
■ détermination d'une première valeur caractéristique sur la base du premier ensemble et du deuxième ensemble défini de grandeurs caractéristiques;
■ mesure d'une valeur de régulation;
■ sortie d'au moins un premier signal de réglage sur un compresseur et
■ sortie d'au moins un deuxième signal de réglage sur un ventilateur et/ou une soufflante de l'installation de climatisation,
les signaux de réglage étant déterminés sur la base de la première valeur caractéristique et de la première valeur de régulation au moins,
le compresseur, le ventilateur et la soufflante de l'installation de climatisation n'étant au moins temporairement pas entraînés par l'énergie fournie par un moteur à combustion interne,
**caractérisé en ce que**
la valeur de régulation est l'état de charge et/ou la capacité de charge d'un accumulateur, et **en ce que** le ou les premiers signaux de réglage commandent et/ou régulent la puissance du compresseur, et le ou les deuxièmes signaux de réglage commandent et/ou régulent la puissance du ventilateur et/ou de la soufflante de l'installation de climatisation.

2. Procédé selon la revendication 1, **caractérisé en ce que** les grandeurs caractéristiques du premier ensemble de grandeurs caractéristiques sont sélectionnées dans un groupe de grandeurs caractéristiques comprenant la température extérieure, la température intérieure, l'intensité lumineuse, la pression de réfrigérant, la température d'au moins un dispositif d'échange de chaleur.

3. Procédé selon au moins une des revendications précédentes, **caractérisé en ce que** les grandeurs caractéristiques du deuxième ensemble de grandeurs caractéristiques sont sélectionnées dans un groupe de grandeurs caractéristiques comprenant la valeur de température de consigne, une valeur temporelle prescrite ou des valeurs similaires.

4. Procédé selon au moins une des revendications précédentes, **caractérisé en ce qu'**un signal de réglage est sorti sur au moins un dispositif sélectionné dans un groupe de dispositifs comprenant des soufflantes pour un évaporateur, des ventilateurs pour un condensateur ou des commandes de clapets.

5. Procédé selon au moins une des revendications précédentes, **caractérisé en ce qu'**au moins un ventilateur est commandé et/ou régulé en fonction de la pression de réfrigérant au moins.

6. Procédé selon au moins une des revendications précédentes, **caractérisé en ce qu'**un besoin de puissance de réfrigération est déterminé dans un groupe de grandeurs caractéristiques comprenant au moins la valeur de température de consigne, la température extérieure et la température intérieure.

7. Installation de climatisation pour un véhicule automobile avec au moins un compresseur pour la compression de réfrigérant, au moins un ventilateur et/ou une soufflante, au moins un premier dispositif d'échange de chaleur, au moins un deuxième dispositif d'échange de chaleur, au moins un dispositif de commande réalisé de manière à commander et/ou réguler l'installation de climatisation suivant un procédé selon l'une des revendications précédentes.

8. Installation de climatisation selon la revendication 7, **caractérisée en ce que** ladite installation de climatisation comporte un dispositif de fourniture d'énergie, ledit dispositif de fourniture d'énergie comportant préférentiellement un dispositif de stockage temporaire d'énergie.

9. Installation de climatisation selon la revendication 8, **caractérisée en ce que** le dispositif de fourniture d'énergie est sélectionné dans un groupe de dispositifs de fourniture d'énergie comprenant des cellules solaires, des piles à combustible et dispositifs similaires.

10. Installation de climatisation selon la revendication 7, **caractérisée en ce qu'**au moins un dispositif de capteur est prévu pour la saisie d'au moins une grandeur caractéristique.

11. Installation de climatisation selon la revendication 7, **caractérisée en ce que** le ou les dispositifs de capteur sont sélectionnés dans un groupe de dispositifs de capteur comprenant des capteurs de température, des capteurs de pression, des capteurs d'intensité lumineuse, des capteurs de tension, des capteurs de courant et des capteurs analogues.

12. Installation de climatisation selon la revendication 7, **caractérisée en ce qu'**un dispositif d'horloge est prévu.

13. Installation de climatisation selon la revendication 7, **caractérisée en ce qu'**un dispositif pour influencer une distribution d'air et/ou un clapet d'air frais/d'air de circulation est prévu.

14. Installation de climatisation selon la revendication 7, **caractérisée en ce qu'**au moins un dispositif de processeur est prévu, exploitant un programme stocké dans au moins un dispositif de mémoire pour exécuter un procédé selon au moins une des revendications précédentes.
